# EUROPEAN PATENT APPLICATION

(11) **EP 4 517 882 A1**
(43) Date of publication of application: **05.03.2025**
(21) Application number: 22962488.7
(22) Date of filing: 21.10.2022
(51) Int. Cl.: H01M 4/587

(54) **CARBONACEOUS MATERIAL AND PREPARATION METHOD THEREFOR, SECONDARY BATTERY COMPRISING SAME, AND ELECTRIC DEVICE**

(71) Applicant: Contemporary Amperex Technology (Hong Kong) Limited, Central, Central And Western District (HK)
(72) Inventor: CHEN, Xiaoxia, Ningde City, Fujian 352100 (CN); ZHANG, Xinxin, Ningde City, Fujian 352100 (CN); MA, Yu, Ningde City, Fujian 352100 (CN); OUYANG, Chuying, Ningde City, Fujian 352100 (CN); ZHENG, Xiaoji, Ningde City, Fujian 352100 (CN); LI, Xiaolong, Ningde City, Fujian 352100 (CN); LIN, Wenguang, Ningde City, Fujian 352100 (CN); CHEN, Shangdong, Ningde City, Fujian 352100 (CN)
(74) Representative: Kraus & Lederer PartGmbB
(86) International application number: PCT/CN2022/126835
(87) International publication number: WO 2024/082307

(57) **Abstract**

The present application provides a carbonaceous material and a preparation method therefor, and a secondary battery and an electrical device comprising the same. The carbonaceous material has 0.13 ≤ A/B ≤ 0.50, wherein A represents a mass of water vapor adsorbed on the carbonaceous material after the carbonaceous material is subjected to adsorption test with water vapor under constant temperature and humidity conditions of 25°C and 100% RH and stands for 100 h, and B represents an initial mass of the carbonaceous material. The present application can simultaneously improve the capacity and initial coulombic efficiency of the carbonaceous material.

## Description

### TECHNICAL FIELD

The present application belongs to the field of battery technologies, and specifically relates to a carbonaceous material and a preparation method therefor, and a secondary battery and an electrical device comprising the same.

### BACKGROUND

In recent years, secondary batteries have been widely used in energy storage power systems such as hydropower, thermal power, wind power, and solar power plants, and in many fields of electric tools, electric bicycles, electric motorcycles, electric vehicles, military equipment, aerospace, and the like. With the application and promotion of secondary batteries, their energy density, service life, and rate performance are receiving increasing attention. Graphite is the most commonly used negative electrode active material in secondary batteries, but its theoretical gram capacity is only 372 mAh/g, so the improvement on its energy density is very limited. Meanwhile, the interlayer spacing of graphite is relatively small, so the improvement on its rate performance is also limited. As a novel negative electrode active material, hard carbon can achieve rapid intercalation and deintercalation of active ions in charging and discharging processes of secondary batteries, so hard carbon has very its development prospect is very broad. However, the capacity and initial coulombic efficiency of hard carbon are relatively low, which limits the improvement on the energy density, service life, and rate performance of secondary batteries.

### SUMMARY

The present application aims to provide a carbonaceous material and a preparation method therefor, and a secondary battery and an electrical device comprising the same, so as to improve the capacity and initial coulombic efficiency of the carbonaceous material simultaneously.

A first aspect of the present application provides a carbonaceous material. The carbonaceous material has 0.13 ≤ A/B ≤ 0.50, wherein A represents a mass of water vapor adsorbed on the carbonaceous material after a water vapor adsorption test by placing the carbonaceous material under constant temperature and humidity conditions of 25°C and 100% RH for 100 h, and B represents an initial mass of the carbonaceous material.

The inventors have further found in research that when A/B is between 0.13 and 0.50, the carbonaceous material has high structural stability and allows more storage space for active ions, which is also conducive to reversible deintercalation and intercalation of active ions. Therefore, the carbonaceous material of the present application can have both relatively high capacity and initial coulombic efficiency and can enable secondary batteries to have high energy density, long service life, and good rate performance simultaneously.

In some embodiments of the present application, 0.15 ≤A/B ≤ 0.50, and optionally 0.30 ≤A/B ≤ 0.496. This is beneficial to further improving the capacity and initial coulombic efficiency of the carbonaceous material.

In some embodiments of the present application, the carbonaceous material has a true density ρ of 1.0 g/cm³ to 1.6 g/cm³, and optionally 1.05 g/cm³ to 1.45 g/cm³. When the true density of the carbonaceous material satisfies the above specific ranges, the gram capacity and initial coulombic efficiency of the carbonaceous material can be further improved.

In some embodiments of the present application, the carbonaceous material includes a plurality of nano pore structures, and optionally, the carbonaceous material includes a plurality of pore structures having a pore size of 10 nm or less.

In some embodiments of the present application, in Raman spectra of the carbonaceous material, I_{d}/I_{g} is 1.0 to 1.3, and optionally 1.05 to 1.15, where I_{d} represents a d-peak intensity of Raman shift within a range of 1350 ± 50 cm⁻¹, and I_{g} represents a g-peak intensity of Raman shift within a range of 1580 ± 50 cm⁻¹. In this case, the structure of the carbonaceous material has a moderate degree of order, so that the carbonaceous material has higher capacity and initial coulombic efficiency and good rate performance.

In some embodiments of the present application, an interlayer spacing of a (002) crystal plane of the carbonaceous material is ≥ 0.37 nm, and optionally 0.37 nm to 0.42 nm.

In some embodiments of the present application, in X-ray diffraction spectra of the carbonaceous material, a 2θ value corresponding to a (002) crystal plane peak is 22° to 24°.

In some embodiments of the present application, the carbonaceous material has a volume particle size Dv50 of 3 µm to 7 µm, and optionally 4 µm to 6 µm.

In some embodiments of the present application, the carbonaceous material has a volume particle size Dv90 of 8 µm to 15 µm, and optionally 9 µm to 12 µm.

When the volume particle size Dv50 and/or Dv90 of the carbonaceous material is/are within the appropriate ranges, the transport performance of active ions and electrons can be improved, thereby further improving the rate performance of secondary batteries.

In some embodiments of the present application, the carbonaceous material has a specific surface area of 0.1 m²/g to 10 m²/g, and optionally 1 m²/g to 5 m²/g. When the specific surface area of the carbonaceous material is within the appropriate ranges, the carbonaceous material can simultaneously have higher capacity and initial coulombic efficiency and better rate performance.

In some embodiments of the present application, the carbonaceous material has a powder compaction density of 0.90 g/cm³ to 1.05 g/cm³ under a force of 50000 N, and optionally 0.93 g/cm³ to 1.02 g/cm³. When the powder compaction density of the carbonaceous material is within the appropriate ranges, the compaction density of the negative electrode plate can be increased, thereby increasing the energy density of the secondary battery.

In some embodiments of the present application, the carbonaceous material has a tap density of 0.80 g/cm³ to 0.95 g/cm³, and optionally 0.85 g/cm³ to 0.90 g/cm³. When the tap density of the carbonaceous material is within the appropriate ranges, the compaction density of the negative electrode plate can be increased, thereby increasing the energy density of the secondary battery.

A second aspect of the present application provides a method for preparing a carbonaceous material, including the following steps:
S10, providing a raw material which is an organic carbon source;
S20, crushing the raw material to a required particle size;
S30, washing and removing impurities, performed by washing the crushed raw material obtained in S20 to remove impurities, where the washing and removing impurities process includes at least an acidic solution washing step and an alkaline solution washing step; and
S40, carbonizing, performed by placing, in a furnace, the raw material obtained in S30 after washing and removing impurities, introducing a protective gas containing hydrogen, controlling furnace pressure to ≤ -2 kPa relative to standard pressure (or shown by vacuum meter), then heating at a rate of ≤ 1°C/min to a target temperature T1, maintaining the target temperature T1 for a target time t1, to obtain a carbonaceous material, where the carbonaceous material has 0.13 ≤ A/B ≤ 0.50, wherein A represents a mass of water vapor adsorbed on the carbonaceous material after a water vapor adsorption test by placing the carbonaceous material under constant temperature and humidity conditions of 25°C and 100% RH for 100 h, and B represents an initial mass of the carbonaceous material.

The carbonaceous material obtained by the preparation method provided in the present application can have both relatively high capacity and initial coulombic efficiency, thereby enabling a secondary battery to have high energy density, long service life, and good rate performance simultaneously.

In some embodiments of the present application, in S20, the crushing includes ball milling or airflow milling crushing.

In some embodiments of the present application, in S30, the washing and removing impurities process includes the following steps in order: acidic solution washing, water washing, alkaline solution washing, water washing, and drying; or in S30, the washing and removing impurities process includes the following steps in order: alkaline solution washing, water washing, acidic solution washing, water washing, and drying.

In some embodiments of the present application, a H⁺ concentration of the acidic solution is 0.1 mol/L to 6 mol/L, and optionally 1 mol/L to 6 moL/L.

In some embodiments of the present application, washing temperature of the acidic solution is 10°C to 95°C, and optionally 30°C to 95°C.

In some embodiments of the present application, washing time of the acidic solution is 1 h to 24 h, and optionally 10 h to 24 h.

In some embodiments of the present application, a solute of the acidic solution includes one or more of hydrochloric acid, nitric acid, sulfuric acid, and perchloric acid, and a solvent of the acidic solution includes water.

By adjusting one or more of the H⁺ concentration, washing temperature, washing time, and solute type of the acidic solution to the above range(s), it is beneficial for achieving sufficient washing and better removing metal impurities.

In some embodiments of the present application, a OH⁻ concentration of the alkaline solution is 0.1 mol/L to 6 moL/L, and optionally 1 mol/L to 6 moL/L.

In some embodiments of the present application, washing temperature of the alkaline solution is 10°C to 95°C, and optionally 30°C to 95°C.

In some embodiments of the present application, washing time of the alkaline solution is 1 h to 24 h, and optionally 10 h to 24 h.

In some embodiments of the present application, a solute of the alkaline solution includes NaOH, KOH, or a combination thereof, and a solvent of the alkaline solution includes water.

By adjusting one or more of the OH⁻ concentration, washing temperature, washing time, and solute type of the alkaline solution to the above range(s), it is beneficial for achieving sufficient washing.

In some embodiments of the present application, in S40, the temperature T1 is 1000°C to 1600°C, and optionally 1150°C to 1500°C. When the temperature T1 is within the above ranges, the carbonaceous material has good pore closure effects, the pore structure of relatively small size, and more storage space for active ions, so the carbonaceous material has relatively high capacity; and the proportion of an electrolytic solution infiltration area inside the carbonaceous material is relatively low, and the consumption of active ions in formation of SEI film is relatively low, so the carbonaceous material has relatively low initial irreversible capacity loss, and relatively high initial coulombic efficiency.

In some embodiments of the present application, in S40, the time t1 is ≥ 1 h, and optionally 10 h to 24 h. When the time t1 for maintaining the temperature is within the above ranges, the heteroatom content of the carbonaceous material can be effectively reduced, so the carbonaceous material has relatively high initial coulombic efficiency.

In some embodiments of the present application, in S40, heating rate is 0.05°C/min to 1°C/min, and optionally 0.1°C/min to 1°C/min. This can improve production efficiency and reduce energy waste.

In some embodiments of the present application, in S40, the protective gas includes a mixture of hydrogen and inert gas, and the hydrogen has a volume concentration of greater than 0 and less than or equal to 5%, and optionally 1% to 5%. The volume concentration of the hydrogen of ≤ 5% is mainly under the consideration of safety perspective.

In some embodiments of the present application, in S40, the furnace pressure as shown by vacuum meter is -5 kPa to -2 kPa, and optionally -5 kPa to -3 kPa. As a result, it is conducive to ensuring safe production.

In some embodiments of the present application, in S10, the organic carbon source includes one or more of biomass materials and thermoplastic resin materials.

In some embodiments of the present application, the biomass materials include one or more of energy crops and biomass wastes.

In some embodiments of the present application, the thermoplastic resin materials include one or more of phenolic resin, acrylic resin, polyvinyl chloride, polycarbonate, epoxy resin, paraformaldehyde, coumarone resin, and petroleum resin.

A third aspect of the present application provides a secondary battery, which includes a negative electrode plate, the negative electrode plate including the carbonaceous material in the first aspect of the present application or the carbonaceous material prepared by the method in the second aspect of the present application.

A fourth aspect of the present application provides an electrical device, which includes the secondary battery in the third aspect of the present application.

The carbonaceous material provided by the present application can have both relatively high capacity and initial coulombic efficiency, and can enable a secondary battery to have high energy density, long service life, and good rate performance simultaneously. The electrical device of the present application includes the secondary battery provided by the present application, and therefore, has at least the same advantages as the secondary battery.

### DESCRIPTION OF THE DRAWINGS

In order to describe the technical solutions of the embodiments of the present application more clearly, the accompanying drawings required in the embodiments of the present application will be briefly introduced below. Apparently, the drawings described below are merely some of the embodiments of the present application, and other drawings may also be obtained by those of ordinary skill in the art according to the drawings without any creative efforts.
Fig. 1 is a schematic diagram of an embodiment of a battery cell of the present application.
Fig. 2 is an exploded schematic diagram of an embodiment of a battery cell of the present application.
Fig. 3 is a schematic diagram of an embodiment of a battery module of the present application.
Fig. 4 is a schematic diagram of an embodiment of a battery pack of the present application.
Fig. 5 is an exploded schematic diagram of an embodiment of the battery pack shown in Fig. 4.
Fig. 6 is a schematic diagram of an embodiment of an electrical device including the secondary battery of the present application as a power supply.
Fig. 7 and Fig. 8 are scanning electron microscopy images of a carbonaceous material provided by the present application.

The drawings are not drawn to actual scale. Reference numerals are described as follows: 1 battery pack, 2 upper box body, 3 lower box body, 4 battery module, 5 battery cell, 51 shell, 52 electrode assembly, 53 cover plate.

### DETAILED DESCRIPTION

Hereinafter, embodiments of a carbonaceous material and a preparation method therefor, and a secondary battery and an electrical device comprising the same of the present application will be explained in detail with appropriate reference to the accompanying drawings. However, unnecessary detailed explanations are omitted. For example, detailed explanations of well-known matters and repeated explanations of actually identical structures are omitted. This prevents the following explanations from becoming unnecessarily lengthy and facilitates understanding of those skilled in the art. In addition, the accompanying drawings and the following description are provided for those skilled in the art to fully understand the present application and are not intended to limit the subject matter of the claims.

The "range" disclosed in the present application is defined in the form of a lower limit and an upper limit. A given range is defined by selecting a lower limit and an upper limit, and the selected lower limit and upper limit define the boundaries of a particular range. The range defined in this way can include or exclude end values, and can be combined arbitrarily, that is, any lower limit can be combined with any upper limit to form a range. For example, if ranges of 60-120 and 80-110 are listed for a specific parameter, it is understood that the ranges of 60-110 and 80-120 are also expected. In addition, if minimum range values 1 and 2 are listed, and if maximum range values 3, 4 and 5 are listed, the following ranges can all be expected and anticipated: 1-3, 1-4, 1-5, 2-3, 2-4 and 2-5. In the present application, unless otherwise specified, the numerical range "a-b" represents an abbreviation of any combination of real numbers between a and b, where both a and b are real numbers. For example, the numerical range "0-5" represents all real numbers "0-5" listed herein, and "0-5" is only an abbreviation of the group or combination of these numbers. In addition, when a parameter is expressed as being an integer of ≥ 2, it is equivalent to disclosing that the parameter is, for example, an integer 2, 3, 4, 5, 6, 7, 8, 9, 10, 11, or 12, etc.

Unless otherwise specified, all embodiments and optional embodiments of the present application may be combined to form new technical solutions, and such resulting technical solutions should be considered included in the disclosure of the present application.

Unless otherwise specified, all technical features and optional technical features of the present application may be combined to form new technical solutions, and such resulting technical solutions should be considered included in the disclosure of the present application.

Unless otherwise specified, all the steps of the present application may be performed sequentially or randomly, but preferably performed sequentially. For example, the method includes steps (a) and (b), which represents that the method may include steps (a) and (b) performed sequentially, or may include steps (b) and (a) performed sequentially. For example, the method may further include step (c), which represents that step (c) may be added to the method in any order. For example, the method may include steps (a), (b) and (c), or steps (a), (c) and (b), or steps (c), (a) and (b).

Unless otherwise specified, the expressions "comprise" and "include" mentioned in the present application are open-ended or close-ended. For example, the expression "comprise" and "include" may comprise or include other components that are not listed, or comprise or include only the listed components.

Unless otherwise specified, in the present application, the term "or" is inclusive. For example, the phrase "A or B" represents "A, B, or both A and B". More specifically, any of the following conditions satisfies the condition "A or B": A is true (or exists) and B is false (or does not exist); A is false (or does not exist) and B is true (or exists); or both A and B are true (or exist).

Unless otherwise specified, the terms used in the present application have commonly known meanings as understood by those skilled in the art.

Unless otherwise specified, values of parameters mentioned in the present application can be measured by various commonly used test methods in the art, for example, measured by test methods provided by the present application.

Unless otherwise specified, in the present application, the term "active ions" refers to ions that can be intercalated and deintercalated back and forth between positive and negative electrodes of a secondary battery, including but not limited to lithium ions, sodium ions, and the like.

In the present application, the terms "a plurality of" and "multiple" refer to two or more.

According to the definition of the International Union of Pure and Applied Chemistry (IUPAC), micropores refer to pores having a pore size of < 2 nm, mesopores refer to pores having a pore size of 2 nm to 50 nm, and macropores refer to pores having a pore size of > 50 nm.

In the context of the present application, all of the term "micropore" refers to pores having a pore size of < 2 nm; all of the term "mesopore" refers to pores having a pore size ranging from 2 nm to 50 nm; and all of the term "macropore" refers to pores having a pore size of > 50 nm.

In the context of the present application, the term "small mesopore" refers to pores having a pore size ranging from 2 nm to 10 nm, and the term "large mesopore" refers to pores having a pore size of greater than 10 nm but less than or equal to 50 nm.

With the application and promotion of secondary batteries, their energy density, service life, and rate performance are receiving increasing attention. Performances of negative electrode active materials determine the energy density, service life, and safety of secondary batteries to a certain extent. Graphite (including natural graphite and artificial graphite) is the most commonly used negative electrode active material in secondary batteries, but its theoretical gram capacity is only 372 mAh/g, so the improvement on its energy density is very limited. Meanwhile, the interlayer spacing of graphite is relatively small, so the improvement on its rate performance is also limited, and the graphite can no longer meet actual needs of secondary batteries with high rate performance.

Compared to graphite, hard carbon has a larger interlayer spacing, which is conducive to rapid intercalation and deintercalation of active ions, so that secondary batteries have excellent low-temperature performance, power performance, and safety performance. Especially in the field of power batteries, hard carbon has unique advantages. However, most commercial hard carbon currently belongs to low capacity hard carbon, with relatively low capacity and initial coulombic efficiency, for example, the capacity is usually 200 mAh/g to 300 mAh/g, and the initial coulombic efficiency is usually less than 85%, which seriously limit its practical application.

Therefore, how to simultaneously improve the capacity and initial coulombic efficiency of hard carbon is still an urgent technical problem to be solved.

In view of this, the first aspect of the embodiments of the present application provides a carbonaceous material, which has both relatively high capacity and initial coulombic efficiency and can enable secondary batteries to have high energy density, long service life, and good rate performance simultaneously.

### Carbonaceous material

The carbonaceous material provided by the present application has 0.13 ≤ A/B ≤ 0.50, wherein A represents a mass of water vapor adsorbed on the carbonaceous material after a water vapor adsorption test by placing the carbonaceous material under constant temperature and humidity conditions of 25°C and 100% RH for 100 h, and B represents an initial mass of the carbonaceous material.

The adsorption test is performed under the following conditions: the carbonaceous material having a mass of B is uniformly placed on a watch glass having a diameter of 10 cm with a stacking thickness of ≤ 0.2 cm in a constant temperature and humidity box of 25°C and 100% RH for 100 h, and then the carbonaceous material with an increased mass is weighed and the increased mass of the carbonaceous material is denoted as the mass A of the adsorbed water vapor.

RH (Relative Humidity) represents relative humidity, which refers to a percentage of partial pressure of water vapor in air to saturated vapor pressure of water at the same temperature.

Compared with currently commercial hard carbon, the carbonaceous material provided by the present application can have both relatively high capacity and initial coulombic efficiency. Although the mechanism is not yet clear, the inventors speculate that a possible reason is that the carbonaceous material provided by the present application has a unique pore structure, which can facilitate intercalation, storage, and deintercalation of active ions. Therefore, the carbonaceous material provided by the present application can have both relatively high capacity and initial coulombic efficiency.

The inventors of the present application have found during research that under the constant temperature and humidity conditions of 25°C and 100% RH, the mass A/B of water vapor adsorbed by per unit mass of the carbonaceous material within 100 h can reflect a space content suitable for storage and reversible deintercalation and intercalation of active ions in the carbonaceous material.

When A/B is less than 0.13, the mass of water vapor adsorbed by the carbonaceous material is relatively low, indicating that the carbonaceous material has low amount of space that is suitable for the storage and reversible deintercalation and intercalation of active ions, resulting in both relatively low capacity and low initial coulombic efficiency of the carbonaceous material.

When A/B is greater than 0.50, the mass of water vapor adsorbed by the carbonaceous material is relatively high. However, the inventors have found during research that such high mass of water vapor is adsorbed into the interlayer structure of the carbonaceous material, but this part of the interlayer structure cannot effectively store active ions; in addition, it is difficult for active ions to intercalate into the pore structure of the carbonaceous material due to too good pore closure effect of the carbonaceous material. Therefore, when A/B is greater than 0.50, the carbonaceous material has little space that is suitable for the storage and reversible deintercalation and intercalation of active ions, resulting in relatively low capacity and relatively low initial coulombic efficiency of the carbonaceous material.

The inventors have further found in research that when A/B is between 0.13 and 0.50, the carbonaceous material has high structural stability and allows more storage space for active ions, which is also conducive to reversible deintercalation and intercalation of active ions. Therefore, the carbonaceous material of the present application can have both relatively high capacity and initial coulombic efficiency, and can enable secondary batteries to have high energy density, long service life, and good rate performance simultaneously. For example, A/B may be 0.14, 0.15, 0.20, 0.25, 0.30, 0.35, 0.40, 0.45, 0.50, or in a range formed from any above values. In some embodiments, optionally, 0.15 ≤ A/B ≤ 0.50, 0.20 ≤ A/B ≤ 0.50, 0.25 ≤ A/B ≤ 0.498,0.30 ≤ A/B ≤ 0.496, 0.35 ≤ A/B ≤ 0.496, or 0.40 ≤ A/B ≤ 0.496. This is beneficial to further improving the capacity and initial coulombic efficiency of the carbonaceous material.

In some embodiments, the carbonaceous material includes a plurality of nano pore structures. Optionally, the carbonaceous material includes a plurality of pore structures having s pore size of 10 nm or less. In some embodiments, the carbonaceous material may further include one or more pore structures having a pore size of greater than 10 nm.

The inventors have found in further research that further adjustment of true density of the carbonaceous material satisfying 0.13 ≤ A/B ≤ 0.50 to an appropriate range can further accurately embody the content of space suitable for the storage and reversible deintercalation and intercalation of active ions in the carbonaceous material.

During true density testing, the space that calibration fluid (such as n-butanol) can enter is less than the actual space of the carbonaceous material, and the unoccupied space may store active ions. The foregoing parameter A/B can embody the content of space suitable for the storage and reversible deintercalation and intercalation of active ions in the carbonaceous material. However, the carbonaceous material further includes interlayer structures in addition to pore structures. The interlayer structures cannot effectively store active ions, the calibration fluid cannot enter the interlayer structures, but water vapor can be adsorbed into the interlayer structures. Therefore, the space suitable for the storage and reversible deintercalation and intercalation of active ions, embodied by the parameter A/B, may include some space that cannot effectively store active ions. Therefore, simultaneous adjustment of the parameter A/B and true density of the carbonaceous material to appropriate ranges can further accurately embody the space content suitable for the storage and reversible deintercalation and intercalation of active ions in the carbonaceous material.

In some embodiments, the carbonaceous material has a true density ρ of 1.0 g/cm³ to 1.6 g/cm³, such as 1.0 g/cm³, 1.05 g/cm³, 1.1 g/cm³, 1.15 g/cm³, 1.2 g/cm³, 1.25 g/cm³, 1.3 g/cm³, 1.35 g/cm³, 1.4 g/cm³, 1.45 g/cm³, 1.5 g/cm³, 1.55 g/cm³, or in a range formed from any above values. Optionally, the carbonaceous material has a true density ρ of 1.05 g/cm³ to 1.45 g/cm³, or 1.10 g/cm³ to 1.40 g/cm³. The inventors have found in further research that when the true density of the carbonaceous material satisfies the above specific range, the gram capacity and initial coulombic efficiency of the carbonaceous material may be further improved.

When the true density of the carbonaceous material is too high or too low, the gram capacity and initial coulombic efficiency of the carbonaceous material cannot be effectively improved. When the true density of the carbonaceous material is too low, less calibration fluid (such as n-butanol) can enter its space, indicating that it is difficult for active ions to intercalate into pore structures due to too good pore closure effect of the carbonaceous material, or too many interlayer structures in the carbonaceous material that are not suitable for the storage of active ions.

When the true density of the carbonaceous material is too high, the calibration fluid (such as n-butanol) easily infiltrates the interior of particles of carbonaceous material, indicating that the carbonaceous material has poor pore closure effect and rich large mesopore structures and/or macropore structures, so that micropore structures and/or small mesopore structures are easily exposed to an electrolytic solution to reduce the storage space for active ions, and the gram capacity and initial coulombic efficiency of the carbonaceous material are reduced accordingly.

In the present application, the true density of the carbonaceous material has a well-known meaning in the art and may be measured by instruments and methods known in the art. For example, the true density may be tested by an Archimedes impregnation volume displacement method, and the calibration fluid may be n-butanol. The test instrument may be a powder true density meter.

In some embodiments, the carbonaceous material may have a regular or irregular morphology, for example, the morphology of the carbonaceous material may be an irregular polygon.

In some embodiments, the content of C element in the carbonaceous material may be ≥ 95 wt%, and optionally 95 wt% to 98 wt%.

In some embodiments, the content of O element in the carbonaceous material may be ≤ 5 wt%, and optionally 1 wt% to 5 wt%. The oxygen heteroatoms do not allow reversible intercalation and deintercalation of active ions that are bound to the oxygen heteroatoms. The carbonaceous material provided by the present application has a relatively low content of oxygen heteroatoms, which can reduce irreversible consumption of the active ions.

In some embodiments, the content of H element in the carbonaceous material may be ≤ 0.3 wt%, and optionally 0.1 wt% to 0.2 wt%.

In some embodiments, the content of N element in the carbonaceous material may be ≤ 0.3 wt%, and optionally 0.01 wt% to 0.1 wt%.

In some embodiments, the total content of C, O, H, and N elements in the carbonaceous material may be ≥ 99 wt%, and optionally 99 wt% to 99.5 wt%.

In some embodiments, the content of S element in the carbonaceous material may be ≤ 0.2 wt%, and optionally 0.01 wt% to 0.1 wt%.

In some embodiments, the content of Na element in the carbonaceous material may be ≤ 0.014 wt%, and optionally ≤ 0.005 wt%.

In some embodiments, in Raman spectra of the carbonaceous material, I_{d}/I_{g} is 1.0 to 1.3, where I_{d} represents a d-peak intensity of Raman shift within a range of 1350 ± 50 cm⁻¹, and I_{g} represents a g-peak intensity of Raman shift within a range of 1580 ± 50 cm⁻¹. For example, I_{d}/I_{g} may be 1.0, 1.05, 1.1, 1.15, 1.2, 1.25, 1.3, or in a range formed from any above values. Optionally, I_{d}/I_{g} may be 1.05 to 1.15.

The Raman spectra of the carbonaceous material may be tested by a Raman spectrometer. During the test, d-peak intensities and g-peak intensities at 100 points are obtained, I_{d}/I_{g} values at the 100 points are calculated, 30 maximum values of I_{d}/I_{g} and 30 minimum values of I_{d}/I_{g} are removed, and an average value of the remaining 40 I_{d}/I_{g} values is used as the I_{d}/I_{g} of the carbonaceous material. The test instrument may be a Horiba LabRAM HR800 Raman spectrometer. The test conditions may be: excitation wavelength of 532 nm, grating 600 lines, objective lens of 50 times, integration time of 10 s, accumulation of 3 times, and surface scanning.

The d-peak arises from lattice defects of carbon atoms, while the g-peak arises from in-plane vibrations of sp2 carbon atoms. In the structures of the carbonaceous material, the d-peak intensity is related to the quantity of structural defects in the carbonaceous material, while the g-peak intensity is related to the quantity of graphite microcrystals in the structures of the carbonaceous material. Therefore, I_{d}/I_{g} may characterize the degree of order in the structure of the carbonaceous material. The smaller the I_{d}/I_{g}, the higher the degree of order in the structure of the carbonaceous material, the higher the integrity of the carbon plane, the higher the initial coulombic efficiency of the carbonaceous material, but the lower the capacity and the poorer the rate performance. The carbonaceous material of the present application satisfies I_{d}/I_{g} of 1.0 to 1.3. In this case, the degree of order in structure of the carbonaceous material is moderate, so the carbonaceous material has relatively high capacity and initial coulombic efficiency and good rate performance at the same time.

In some embodiments, an interlayer spacing of a (002) crystal plane of the carbonaceous material is ≥ 0.37 nm, and optionally 0.37 nm to 0.42 nm.

In some embodiments, in X-ray diffraction spectra of the carbonaceous material, a 2θ value corresponding to a (002) crystal plane peak is 22° to 24°.

In the present application, the interlayer spacing of the (002) crystal plane of the carbonaceous material may be tested by an X-ray diffractometer in accordance with JIS K 0131-1996 and JB/T 4220-2011. The test instrument may be a Bruker D8 Discover X-ray diffractometer.

In some embodiments, the carbonaceous material has a volume particle size Dv50 of 3 µm to 7 µm, and optionally 4 µm to 6 µm.

In some embodiments, the carbonaceous material has a volume particle size Dv90 of 8 µm to 15 µm, and optionally 9 µm to 12 µm.

In some embodiments, the carbonaceous material has a volume particle size Dv50 of 3 µm to 7 µm and a volume particle size Dv90 of 8 µm to 15 µm. Optionally, the carbonaceous material has a volume particle size Dv50 of 4 µm to 6 µm and a volume particle size Dv90 of 9 µm to 12 µm.

When the volume particle size Dv50 and/or Dv90 of the carbonaceous material is/are within the appropriate ranges, the transport performance of active ions and electrons can be improved, thereby further improving the rate performance of secondary batteries.

In the present application, the volume particle sizes Dv50 and Dv90 of the carbonaceous material are well known in the art, represent the particle sizes corresponding to cumulative volume distribution percentages 50% and 90% of the material respectively, and can be measured by instruments and methods known in the art. For example, the volume particle sizes can be conveniently measured by a laser particle size analyzer in accordance with GB/T 19077-2016 particle size distribution laser diffraction method. The test instrument may be a Mastersizer 2000E laser particle size analyzer from Marvin Instruments Limited in the UK.

In some embodiments, the carbonaceous material has a specific surface area of 0.1 m²/g to 10 m²/g, and optionally 1 m²/g to 5 m²/g. When the specific surface area of the carbonaceous material is relatively small, it helps to reduce the surface activity of the carbonaceous material and reduce the consumption of active ions during the formation of SEI film, thereby improving the initial coulombic efficiency of the carbonaceous material and secondary batteries; and when the specific surface area of the carbonaceous material is relatively large, it helps to accelerate the transport of active ions, thereby improving the rate performance of secondary batteries. Therefore, when the specific surface area of the carbonaceous material is within the appropriate ranges, the carbonaceous material can simultaneously have higher capacity and initial coulombic efficiency and better rate performance. Moreover, when the specific surface area of the carbonaceous material is within the appropriate range, there is relatively strong bonding force between the carbonaceous material and a binder, which can improve cohesion and bonding force of a negative electrode plate and reduce volume expansion of the negative electrode plate during cycle, so that the secondary battery has better cycle performance.

In the present application, the specific surface area of the carbonaceous material has a well-known meaning in the art and may be measured by instruments and methods known in the art. For example, the specific surface area may be tested by a nitrogen adsorption specific surface area analysis test method in accordance with GB/T 19587-2017 and calculated by a BET (Brunauer Emmett Teller) method, where the nitrogen adsorption specific surface area analysis test may be performed by using an ASAP 3020 surface area and pore size analyzer from Micromeritics in the United States.

In some embodiments, the carbonaceous material has a powder compaction density of 0.90 g/cm³ to 1.05 g/cm³ under a force of 50000 N, and optionally 0.93 g/cm³ to 1.02 g/cm³. When the powder compaction density of the carbonaceous material is within the appropriate ranges, the compaction density of the negative electrode plate can be increased, thereby increasing the energy density of the secondary battery.

In the present application, the powder compaction density of the carbonaceous material has a well-known meaning in the art and may be measured by instruments and methods known in the art. For example, the powder compaction density may be measured by an electronic pressure testing machine (such as UTM7305 model) in accordance with GB/T24533-2009. An exemplary test method is as follows: 1 g of carbonaceous material powder is weighed and added to a mold with a bottom area of 1.327 cm²; pressure is applied to 5000 kg (equivalent to 50000 N), held for 30 s, then released, and held for 10 s; and a powder compaction density of the carbonaceous material under the force of 50000 N is recorded and calculated.

In some embodiments, the carbonaceous material has a tap density of 0.80 g/cm³ to 0.95 g/cm³, and optionally 0.85 g/cm³ to 0.90 g/cm³. When the tap density of the carbonaceous material is within the appropriate ranges, the compaction density of the negative electrode plate can be increased, thereby increasing the energy density of the secondary battery.

In the present application, the tap density of the carbonaceous material has a well-known meaning in the art and can be measured by instruments and methods known in the art. For example, the tap density may be measured by a powder tap density tester in accordance with GB/T 5162-2006. The test instrument may be BT-301.

### Method for preparing carbonaceous material

The second aspect of the embodiments of the present application provides a method for preparing a carbonaceous material, including the following steps: S10, providing a raw material which is an organic carbon source; S20, crushing the raw material to a required particle size; S30, washing and removing impurities, performed by washing the crushed raw material obtained in S20 to remove impurities, where the washing and removing impurities process includes at least an acidic solution washing step and an alkaline solution washing step; and S40, carbonizing, performed by placing, in a furnace, the raw material obtained in S30 after washing and removing impurities, introducing a protective gas containing hydrogen, controlling furnace pressure as shown by vacuum meter to ≤ -2 kPa, then heating at a rate of ≤ 1°C/min to a target temperature T1, and maintaining the target temperature T1 for a target time t1, to obtain a carbonaceous material, where the carbonaceous material has 0.13 ≤ A/B ≤ 0.50, wherein A represents a mass of water vapor adsorbed on the carbonaceous material after a water vapor adsorption test by placing the carbonaceous material under constant temperature and humidity conditions of 25°C and 100% RH for 100 h, and B represents an initial mass of the carbonaceous material.

The preparation method for the carbonaceous material in the present application includes a crushing process, a washing and removing impurities process, and a carbonization process.

The crushing can reduce the particle size of the raw material, so as to obtain a carbonaceous material with a required size. In some embodiments, particles after crushing have a volume particle size Dv50 of 3 µm to 7 µm, and optionally 4 µm to 6 µm. In some embodiments, the particles after crushing have a volume particle size Dv90 of 8 µm to 15 µm, and optionally 9 µm to 12 µm. In some embodiments, the particles after crushing have a volume particle size Dv50 of 3 µm to 7 µm and a volume particle size Dv90 of 8 µm to 15 µm, and optionally, the particles after crushing have a volume particle size Dv50 of 4 µm to 6 µm and a volume particle size Dv90 of 9 µm to 12 µm.

The washing and removing impurities can remove inorganic and water-soluble impurities from the raw material, so as to avoid reduction of metal impurities into metal elements and then agglomeration in the subsequent carbonization process. The agglomeration of metal elements may lead to collapse of carbon skeleton structures, especially collapse of micropore structures and/or small mesopore structures, resulting in a decrease in storage space for active ions and a decrease in capacity of the obtained carbonaceous material. Meanwhile, the metal impurities have catalytic activity, which will exacerbate decomposition of the carbon skeleton structures in a thermal pyrolysis process, resulting in tendency of the pore structures to formation of relatively large mesopore structures and/or macropore structures, the increased proportion of an electrolytic solution infiltration area inside the obtained carbonaceous material, and the increased consumption of active ions during the formation of SEI film, and the increased loss of initial irreversible capacity, and the decreased initial coulombic efficiency. The washing and removing impurities process at least includes an acidic solution washing step and an alkaline solution washing step, where the acidic solution is mainly used for removing metal impurities from the raw material, and the alkaline solution is mainly used for removing Si impurities and the like that cannot react with acid from the raw material, thereby ensuring full removal of impurities.

The crushing process must be performed before the washing and removing impurities process, so that when the washing and removing impurities is performed, surfaces of particles can be exposed as much as possible to facilitate full contact between the particles and the washing solution and improve the impurity removal effect. If the crushing process is performed after the washing and removing impurities process, the washing solution may not be able to enter bulk phases of large raw material particles, and impurities deeply wrapped in the bulk phases of the large raw material particles cannot be removed, resulting in insufficient removal of impurities, and the reduction of the remaining metal impurities into metal elements and agglomeration in the subsequent carbonization process. The agglomeration of metal elements may lead to collapse of carbon skeleton structures, especially collapse of micropore structures and/or small mesopore structures, resulting in a decrease in storage space for active ions and a decrease in capacity of the obtained carbonaceous material. Meanwhile, the metal impurities further have catalytic activity, which will exacerbate decomposition of the carbon skeleton structures in a thermal pyrolysis process, resulting in tendency of the pore structures to formation of relatively large mesopore structures and/or macropore structures, the increased proportion of an electrolytic solution infiltration area inside the obtained carbonaceous material, the increased consumption of active ions during the formation of SEI film , the increased loss of initial irreversible capacity, and the decreased initial coulombic efficiency.

Heating is performed at a rate of ≤ 1°C/min during carbonization. If the heating rate is too high, gaseous small molecule substances released during thermal pyrolysis of the raw material cannot escape from the bulk phases of particles to the surface in a timely manner and then be transported to a furnace and discharged with the help of protective gas in the furnace. Instead, these gaseous small molecule substances will be bound in the bulk phases of particles and converted into carbon by further thermal pyrolysis, which will block the pore structures, thereby resulting in the decreased storage space for active ions and a decrease in capacity of the obtained carbonaceous material. Moreover, if the heating rate is too high, the true density of the carbonaceous material of the same size increases, and the pore structures of the carbonaceous material are not unobstructed, rendering the deintercalation of active ions more difficult, thus the initial coulombic efficiency reduced.

The protective gas during carbonization contains hydrogen, which has a reduction effect and can reduce generation of oxygen-containing functional groups on the surface of the carbonaceous material, thereby reducing the defects of heteroatoms (such as oxygen heteroatoms) in the finally obtained carbonaceous materials and increasing the initial coulombic efficiency. When the protective gas does not contain hydrogen, the oxygen-containing functional groups on some portions of the surface of the carbonaceous material cannot be effectively reduced, resulting in excessive oxygen heteroatoms on the finally obtained carbonaceous material. The oxygen heteroatoms do not allow reversible intercalation and deintercalation of active ions that are bound to the oxygen heteroatoms, resulting in a decrease in the initial coulombic efficiency of the carbonaceous material. Meanwhile, a lot of oxygen-containing functional groups remain on the surface of the carbonaceous material to form hydrogen bonding with water molecules, thus more water molecule clusters block the surface of the carbonaceous material to hinder the intercalation of active ions, thereby resulting in a decrease in the gram capacity of the carbonaceous material.

The inventors of the present application have further unexpectedly found in research that the furnace pressure affects the performance of the finally obtained carbonaceous material. If the furnace pressure is too high, gaseous small molecule substances released during thermal pyrolysis of the raw material cannot escape from the bulk phases of particles to the outside. Instead, these gaseous small molecule substances will be bound in the bulk phases of particles and converted into carbon by further thermal pyrolysis, which will block the pore structures, thereby resulting in the decreased storage space for active ions and a decrease in capacity of the obtained carbonaceous material. In addition, if the furnace pressure is too high, the true density of the carbonaceous material of the same size increases, and the pore structures of the carbonaceous material are not unobstructed, rendering the deintercalation of active ions more difficult, thus the initial coulombic efficiency reduced.

Therefore, the carbonaceous material obtained by the preparation method provided in the present application can have both relatively high capacity and initial coulombic efficiency, thereby enabling a secondary battery to have high energy density, long service life, and good rate performance simultaneously.

The preparation method in the second aspect of the embodiments of the present application can prepare the carbonaceous material in any embodiment of the first aspect of the embodiments of the present application. The preparation method for the carbonaceous material in the present application is simple and suitable for commercial production. The preparation method of the carbonaceous material in the present application does not require adding additional conductive agents or other additives, resulting in lower heteroatom content in the carbonaceous material obtained by the preparation method of the present application.

In the present application, "organic carbon source" refers to a class of materials that are rich in carbon elements and can form carbonaceous materials. In some embodiments, in S10, the organic carbon source may include one or more of biomass materials and thermoplastic resin materials, and optionally, the organic carbon source includes biomass materials. In some embodiments, the organic carbon source may further include only biomass materials.

The biomass materials may be materials known in the art that are suitable for preparing carbonaceous materials. In some embodiments, the biomass materials may include one or more of energy crops and biomass wastes. For example, the biomass materials include but are not limited to one or more of wood, straws, bamboo, barks, and fruit shells.

In some embodiments, the thermoplastic resin materials may include one or more of phenolic resin, acrylic resin, polyvinyl chloride, polycarbonate, epoxy resin, paraformaldehyde, coumarone resin, and petroleum resin.

In some embodiments, in S20, the crushing may be a process known in the art that is suitable for crushing in the preparation of the carbonaceous material, for example, the crushing may include but is not limited to ball milling or airflow milling crushing.

The sequence of acidic solution washing and alkaline solution washing is not particularly limited. In some embodiments, in S30, the washing and removing impurities process includes the following steps in order: acidic solution washing, water washing, alkaline solution washing, water washing, and drying. In some embodiments, in S30, the washing and removing impurities process includes the following steps in order: alkaline solution washing, water washing, acidic solution washing, water washing, and drying. Deionized water may be used for washing, with one or more cycles until the pH of the filtrate is neutral (namely, pH 7 ± 0.5), indicating that the washing process is completed. The drying may be air blowing or vacuum drying, until the mass change rate of the material after an interval of 2 h is < 0.1 wt%, indicating that the drying process is completed.

The type, concentration of solute, washing temperature, and washing time of the acidic solution and the alkaline solution are not limited in the present application, as long as impurities can be fully removed.

In some embodiments, in S30, the H⁺ concentration of the acidic solution is 0.1 mol/L to 6 moL/L, and optionally 1 mol/L to 6 moL/L.

In some embodiments, in S30, the washing temperature of the acidic solution is 10°C to 95°C, and optionally 30°C to 95°C.

In some embodiments, in S30, the washing time of the acidic solution is 1 h to 24 h, and optionally 10 h to 24 h.

In some embodiments, in S30, the solute of the acidic solution includes one or more of hydrochloric acid, nitric acid, sulfuric acid, and perchloric acid, and the solvent includes water. As a result, metal impurities may be fully removed, and no other impurity elements will be introduced.

Full washing can be implemented and metal impurities can be better removed, by adjusting one or more of the H⁺ concentration, washing temperature, washing time, and solute type of the acidic solution to the above ranges.

In some embodiments, in S30, the OH⁻ concentration of the alkaline solution is 0.1 mol/L to 6 moL/L, and optionally 1 mol/L to 6 moL/L.

In some embodiments, in S30, the washing temperature of the alkaline solution is 10°C to 95°C, and optionally 30°C to 95°C.

In some embodiments, in S30, the washing time of the alkaline solution is 1 h to 24 h, and optionally 10 h to 24 h.

In some embodiments, in S30, the solute of the alkaline solution includes NaOH, KOH, or a combination thereof, and the solvent includes water. As a result, Si impurities and the like may be fully removed, and no other impurity elements will be introduced.

Full washing can be implemented, by adjusting one or more of the OH⁻ concentration, washing temperature, washing time, and solute type of the alkaline solution to the above ranges.

In some embodiments, in S40, the temperature T1 is 1000°C to 1600°C, for example, such as 1000°C, 1050°C, 1100°C, 1150°C, 1200°C, 1250°C, 1300°C, 1350°C, 1400°C, 1450°C, 1500°C, 1550°C, 1600°C, or in a range formed from any above values. Optionally, the temperature T1 is 1150°C to 1500°C.

When the temperature T1 is within the above range, the pore closure effect of the carbonaceous material is good, the size of the pore structure is relatively small, and there is more storage space for active ions, so the capacity of the carbonaceous material is relatively high; meanwhile the proportion of an electrolytic solution infiltration area inside the carbonaceous material is relatively low, and the consumption of active ions in the formation of SEI film formation is relatively low, so the initial irreversible capacity loss of the carbonaceous material is relatively low, and the initial coulombic efficiency is relatively high.

When the temperature T1 is too low, the obtained carbonaceous material has a small true density and a large interlayer spacing, a lot of water vapor is adsorbed into interlayer structures to result in a relatively high adsorption mass of water vapor, but the interlayer structures of the carbonaceous material cannot effectively store active ions, resulting in a decrease in the capacity and initial coulombic efficiency of the carbonaceous material.

When the temperature T1 is too high, the obtained carbonaceous material has a large true density and a small interlayer spacing, which increases the difficulty in intercalation and deintercalation of active ions and decreases the capacity and initial coulombic efficiency of the carbonaceous material.

In some embodiments, in S40, the time t1 may be ≥ 1 h, such as ≥ 2 h, ≥ 4 h, ≥ 6 h, ≥ 8 h, ≥ 10 h, ≥ 12 h, ≥ 14 h, or ≥ 16 h. When the time t1 for maintaining the temperature is within the above ranges, the heteroatom content of the carbonaceous material can be effectively reduced, so the carbonaceous material has relatively high initial coulombic efficiency. The time t1 for maintaining the temperature is relatively short, the oxygen-containing functional groups on some portions of the surface of the carbonaceous material cannot be effectively reduced, so the finally obtained carbonaceous material contains a lot of oxygen heteroatoms which do not allow reversible intercalation and deintercalation of active ions that are bound to the oxygen heteroatoms, and thus the initial coulombic efficiency of the carbonaceous material decreases accordingly.

Moreover, the time t1 for maintaining the temperature should not be too long, otherwise energy is wasted due to excessive energy consumption. In some embodiments, optionally, the time t1 is 1 h to 24 h, 2 h to 24 h, 5 h to 24 h, or 10 h to 24 h.

In some embodiments, in S40, the heating rate may be 0.05°C/min to 1°C/min, 0.06°C/min to 1°C/min, 0.08°C/min to 1°C/min, or 0.1°C/min to 1°C/min. This can improve production efficiency and reduce energy waste.

In some embodiments, in S40, the protective gas may include a mixture of hydrogen and inert gas, and the hydrogen has a volume concentration of greater than 0 and less than or equal to 5%, and optionally 1% to 5%. The volume concentration of the hydrogen of ≤ 5% is mainly under the consideration of safety perspective. The inert gas may include nitrogen, argon, helium, or a combination thereof.

In the carbonization process, if the furnace pressure is too low, the raw material powder will float and escape into the furnace due to negative pressure. As a result, the furnace is contaminated, the yield decreases, and dust and protective gas easily enter an exhaust pipe at the same time to increase the risk of dust explosion. In some embodiments, in S40, the furnace pressure is -5 kPa to -2 kPa, and optionally -5 kPa to -3 kPa as shown by vacuum meter. As a result, it is conducive to ensuring safe production.

In some embodiments, the preparation method further includes: S50, secondary crushing: crushing the carbonaceous material obtained in S40, in which case the carbonaceous material that may agglomerate in the preparation process can be crushed, so that the carbonaceous material has a required particle size to facilitate the preparation of a negative electrode slurry and a negative electrode plate. Apparently, in some embodiments, this step may be omitted.

In some embodiments, the preparation method includes the following steps: S10, providing a raw material which is an organic carbon source; S20, crushing the raw material to a required particle size; S30, washing and removing impurities, performed by washing the crushed raw material obtained in S20 to remove impurities, where the washing and removing impurities process includes at least an acidic solution washing step and an alkaline solution washing step; and S40, carbonizing, performed by placing, in a furnace, the raw material obtained in S30 after washing and removing impurities, introducing a protective gas containing hydrogen, controlling furnace pressure to ≤ -2 kPa, then heating at a rate of ≤ 1°C/min to 1000°C to 1600°C, and maintaining this temperature for 1 h to 24 h, to obtain a carbonaceous material, where the carbonaceous material has 0.13 ≤ A/B ≤ 0.50, wherein A represents a mass of water vapor adsorbed on the carbonaceous material after a water vapor adsorption test by placing the carbonaceous material under constant temperature and humidity conditions of 25°C and 100% RH for 100 h, and B represents an initial mass of the carbonaceous material. The obtained carbonaceous material can have both relatively high capacity and initial coulombic efficiency, thereby further improving the energy density, service life, and rate performance of secondary batteries.

### Secondary battery

The third aspect of the embodiments of the present application provides a secondary battery.

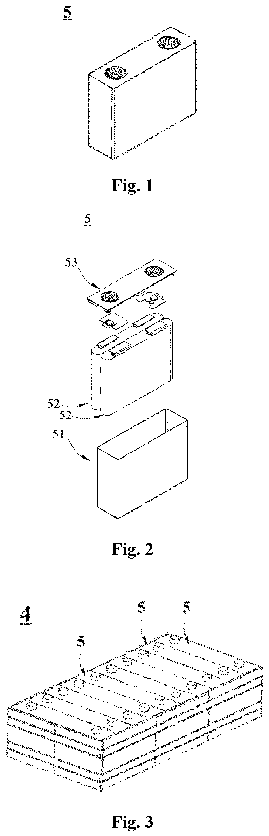

The secondary battery mentioned in the examples or embodiments of the present application refers to a single physical module that includes one or more battery cells to provide higher voltage and capacity. For example, the secondary battery mentioned in the present application may include battery cells, a battery module, or a battery pack. The battery cell is a minimum unit that constitutes a secondary battery, and can independently achieve a function of charging and discharging. The shape of the battery cell is not limited in present application. The battery cell may be cylindrical, square, or in any other shape. Fig. 1 is an example of a square battery cell 5.

In some embodiments, the battery cell includes an electrode assembly and an electrolyte, and the battery cell may further include an outer package. The outer package may be used for packaging the electrode assembly and the electrolyte. The outer package may be a hard case, such as a hard plastic case, an aluminum case, or a steel case. The outer package may alternatively be a soft package, such as a bag-type soft package. A material of the soft package may be plastic, such as one or more of polypropylene (PP), polybutylene terephthalate (PBT), and polybutylene succinate (PBS).

The electrode assembly usually includes a positive electrode plate, a negative electrode plate, among others. In the charging and discharging process of the secondary battery, active ions are intercalated and deintercalated back and forth between the positive electrode plate and the negative electrode plate, and the electrolyte provides the function of conducting active ions between the positive electrode plate and the negative electrode plate. The electrode assembly may be made by winding and/or stacking.

In some embodiments, as shown in Fig. 2, the outer package may include a shell 51 and a cover plate 53. The shell 51 may include a bottom plate and side plates connected to the bottom plate, and the bottom plate and the side plates enclose an accommodating cavity. The shell 51 has an opening in communication with the accommodating cavity, and the cover plate 53 fits on the opening to seal the accommodating cavity. The electrode assembly 52 is packaged in the accommodating cavity. The battery cell 5 may include one or more electrode assemblies 52, which may be adjusted according to a demand.

In some embodiments of the present application, the battery cells may be assembled into a battery module, the battery module may include a plurality of battery cells, and the specific quantity may be adjusted according to the application and capacity of the battery module. Fig. 3 is a schematic diagram of a battery module 4 as an example. As shown in Fig. 3, in the battery module 4, the plurality of battery cells 5 may be arranged successively in a length direction of the battery module 4. Alternatively, the battery cells may be arranged in any other manner. Further, the plurality of battery cells 5 may be fixed by fasteners.

Optionally, the battery module 4 may further include a housing with an accommodating space, and the plurality of battery cells 5 are accommodated in the accommodating space.

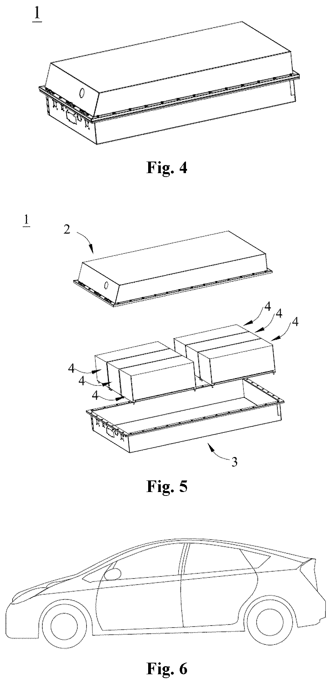

In some embodiments, the foregoing battery modules may be further assembled into a battery pack, and the quantity of the battery modules included in the battery pack may be adjusted according to the application and capacity of the battery pack. Fig. 4 and Fig. 5 are schematic diagrams of a battery pack 1 as an example. As shown in Fig. 4 and Fig. 5, the battery pack 1 may include a battery box and a plurality of battery modules 4 disposed in the battery box. The battery box includes an upper box body 2 and a lower box body 3. The upper box body 2 fits on the lower box body 3 to form a closed space for accommodating the battery modules 4. The plurality of battery modules 4 may be arranged in the battery box in any manner.

### [Negative electrode plate]

In some embodiments, the negative electrode plate includes a negative electrode current collector and a negative electrode film layer disposed on at least one surface of the negative electrode current collector. For example, the negative electrode current collector has two surfaces opposite in its thickness direction, and the negative electrode film layer is disposed on either or both of the two opposite surfaces of the negative electrode current collector.

In some embodiments, the negative electrode film layer includes the carbonaceous material in the first aspect of the embodiments of the present application or the carbonaceous material prepared by the method in the second aspect of the embodiments of the present application. As a result, the secondary battery can have high energy density, long service life, and good rate performance.

In some embodiments, the negative electrode film layer may further include other negative electrode active materials in addition to the foregoing carbonaceous material. In some embodiments, the other negative electrode active materials include, but are not limited to, one or more of natural graphite, artificial graphite, soft carbon, silicon-based materials, tin-based materials, and lithium titanate. The silicon-based materials may include one or more of elemental silicon, silicon oxides, silicon-carbon composites, silicon-nitrogen composites, and silicon alloy materials. The tin-based material may include one or more of elemental tin, tin oxides, and tin alloy materials.

In some embodiments, the negative electrode film layer may further optionally include a negative electrode conductive agent. The type of the negative electrode conductive agent is not specially limited in the present application. As an example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film layer may further optionally include a negative electrode binder. The type of the negative electrode binder is not specially limited in the present application. As an example, the negative electrode binder may include one or more of styrene butadiene rubber (SBR), water-soluble unsaturated resin SR-1B, water-based acrylic resin (such as polyacrylic acid PAA, polymethyl methacrylate PMAA, polyacrylic acid sodium PAAS), polyacrylamide (PAM), polyvinyl alcohol (PVA), sodium alginate (SA), and carboxymethyl chitosan (CMCS).

In some embodiments, the negative electrode film layer may further optionally include other auxiliaries. As an example, the other auxiliaries may include a thickener, such as carboxymethyl cellulose sodium (CMC) or a PTC thermistor material.

In some embodiments, the negative electrode current collector may be a metal foil or a composite current collector. A copper foil may be used as an example of the metal foil. The composite current collector may include a polymer material base layer and a metal material layer formed on at least one surface of the polymer material base layer. As an example, the metal material may include one or more of copper, copper alloy, nickel, nickel alloy, titanium, titanium alloy, silver, and silver alloy. As an example, the polymer material base layer may include one or more of polypropylene (PP), polyethylene terephthalate (PET), polybutylene terephthalate (PBT), polystyrene (PS), and polyethylene (PE).

The negative electrode film layer is usually formed by coating the negative electrode current collector with a negative electrode slurry, drying, and cold pressing. The negative electrode slurry is usually formed by dispersing the negative electrode active material, the optional conductive agent, the optional binder, and other optional auxiliaries in a solvent and stirring uniformly. The solvent may be N-methylpyrrolidone (NMP) or deionized water, but is not limited to this.

The negative electrode plate does not exclude other additional functional layers besides the negative electrode film layer. For example, in some embodiments, the negative electrode plate described in the present application further includes a conductive primer layer (for example, composed of a conductive agent and a binder) sandwiched between the negative electrode current collector and the negative electrode film layer and disposed on the surface of the negative electrode current collector. In some embodiments, the negative electrode plate described in the present application further includes a protective layer covering the surface of the negative electrode film layer.

### [Positive electrode plate]

In some embodiments, the positive electrode plate includes a positive electrode current collector and a positive electrode film layer disposed on at least one surface of the positive electrode current collector. For example, the positive electrode current collector has two surfaces opposite in its thickness direction, and the positive electrode film layer is disposed on either or both of the two opposite surfaces of the positive electrode current collector.

The positive electrode current collector may be a metal foil or a composite current collector. An aluminum foil may be used as an example of the metal foil. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver, and silver alloy. As an example, the polymer material base layer may include one or more of polypropylene (PP), polyethylene terephthalate (PET), polybutylene terephthalate (PBT), polystyrene (PS), and polyethylene (PE).

The positive electrode film layer usually includes a positive electrode active material, an optional binder, and an optional conductive agent. The positive electrode film layer is usually formed by coating the positive electrode current collector with a positive electrode slurry, drying, and cold pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited to this. As an example, the binder used for the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluoroacrylate resin. As an example, the conductive agent used for the positive electrode film layer includes one or more of superconducting carbon, conductive graphite, acetylene black, carbon black, Koqin black, carbon dots, carbon nanotubes, graphene, and carbon nanofibers.

The positive electrode active material may be a positive electrode active material commonly known in the art for secondary batteries.

When the secondary battery of the present application is a lithium-ion battery, the positive electrode active material may include, but is not limited to, one or more of lithium-containing transition metal oxides, lithium-containing phosphates, and respective modified compounds thereof. Examples of the lithium-containing transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphates may include, but are not limited to, one or more of lithium iron phosphate, a composite material of lithium iron phosphate and carbon, lithium manganese phosphate, a composite material of lithium manganese phosphate and carbon, lithium iron manganese phosphate, a composite material of lithium iron manganese phosphate and carbon, and respective modified compounds thereof.

In some embodiments, in order to further increase the energy density of the secondary battery, the positive electrode active material used for the lithium-ion battery may include one or more of lithium transition metal oxides represented by a general formula LiₐNi_{b}Co_{c}M_{d}OₑA_{f} and modified compounds thereof. 0.8 ≤ a ≤ 1.2, 0.5 ≤ b <1, 0 < c < 1, 0 < d < 1, 1 ≤ e ≤ 2, 0 ≤ f ≤ 1, M includes one or more selected from Mn, Al, Zr, Zn, Cu, Cr, Mg, Fe, V, Ti, and B, and A includes one or more selected from N, F, S, and Cl.

As an example, the positive electrode active material used for the lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}CO_{0.15}Al_{0.05}O₂, LiFePO₄, and LiMnPO₄.

When the secondary battery of the present application is a sodium-ion battery, the positive electrode active material may include, but is not be limited to, one or more of sodium-containing transition metal oxides, polyanionic materials (such as phosphates, fluorophosphates, pyrophosphates, and sulfates), and Prussian blue materials.

As an example, the positive electrode active material used for the sodium-ion battery may include one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, Prussian blue materials, and materials represented by general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, and 0 ≤ x ≤ 2; X includes one or more selected from H⁺, Li⁺, Na⁺, K⁺, and NH₄⁺; M' is a transition metal cation, and optionally includes one or more selected from V, Ti, Mn, Fe, Co, Ni, Cu, and Zn; and Y is a halogen anion, and optionally includes one or more selected from F, Cl, and Br.

In the present application, the modified compounds of the foregoing positive electrode active materials may be obtained by doping modification and/or surface coating modification of the positive electrode active materials.

### [Electrolyte]

The type of the electrolyte is not limited in the present application, which may be selected according to actual needs. For example, the electrolyte may be selected from at least one of solid electrolytes and liquid electrolytes (namely, electrolytic solution).

In some embodiments, the electrolyte is an electrolytic solution, which includes an electrolyte salt and a solvent.

The type of the electrolyte salt is not specifically limited and may be selected according to actual needs.

When the secondary battery of the present application is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bis(oxalate)borate (LiBOB), lithium difluorophosphate (LiPO₂F₂), lithium difluorobisoxalate phosphate (LiDFOP), and lithium tetrafluorooxalate phosphate (LiTFOP).

When the secondary battery of the present application is a sodium-ion battery, the electrolyte salt may include one or more of sodium hexafluorophosphate (NaPF₆), sodium tetrafluoroborate (NaBF₄), sodium perchlorate (NaClO₄), sodium hexafluoroarsenate (NaAsF₆), sodium bisfluorosulfonimide (NaFSI), sodium bistrifluoromethanesulfonimide (NaTFSI), sodium trifluoromethanesulfonate (NaTFS), sodium difluorooxalate borate (NaDFOB), sodium bis(oxalate)borate (NaBOB), sodium difluorophosphate (NaPO₂F₂), sodium difluorobisoxalate phosphate (NaDFOP), and sodium tetrafluorooxalate phosphate (NaTFOP).

The type of the solvent is not specifically limited and may be selected according to actual needs. In some embodiments, as an example, the solvent may include one or more of ethylene carbonate (EC), propylidene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and ethyl sulfonyl ethane (ESE).

In some embodiments, the electrolytic solution may further optionally include additives. For example, the additives may include a negative electrode film-forming additive, a positive electrode film-forming additive, and additives that can improve some performances of batteries, such as an additive that improves overcharge performance of batteries, an additive that improves high-temperature performance of batteries, and an additive that improves low-temperature performance of batteries.

### [Separator]

The secondary battery using the electrolytic solution and some secondary batteries using solid electrolytes further include a separator. The separator is disposed between the positive electrode plate and the negative electrode plate to serve as an isolation. The type of the separator is not specially limited in the present application. The separator may be any known porous separator with good chemical and mechanical stability.

In some embodiments, a material of the separator may include one or more of glass fibers, non-woven fabric, polyethylene, polypropylene, and polyvinylidene fluoride. The separator may be a single-layer film or a multi-layer composite film. When the separator is a multi-layer composite film, materials of respective layers may be the same or different.

### [Preparation method]

The preparation method for a secondary battery in the present application is well known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding process and/or a stacking process, the electrode assembly is placed in an outer package and dried, then the electrolytic solution is injected, and a battery cell is obtained after vacuum packaging, standing, formation, shaping, and other processes. A plurality of battery cells may be further connected in series, in parallel, or in series and parallel to form a battery module. A plurality of battery modules may be further connected in series, in parallel, or in series and parallel to form a battery pack. In some embodiments, a plurality of battery cells may directly form a battery pack.

### Electrical device

The fourth aspect of the embodiments of the present application provides an electrical device, including the secondary battery of the present application. The secondary battery may be used as a power supply of the electrical device, and may also be used as an energy storage unit of the electrical device. The electrical device may be, but is not limited to, a mobile device (such as a mobile phone, a tablet computer, or a notebook computer), an electric vehicle (such as a full electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may have a specific type of the secondary battery based on its usage needs, such as battery cells, a battery module, or a battery pack.

Fig. 6 is a schematic diagram of an electrical device as an example. The electrical device is a full electric vehicle, a hybrid electric vehicle, a plug-in hybrid electric vehicle, or the like. In order to meet the requirements of the electrical device for high power and high energy density, the battery pack or battery module may be used as a power supply.

As another example, the electrical device may be a mobile phone, a tablet computer, a notebook computer, or the like. The electrical device is generally required to be thin and light, so the battery cells may be used as a power supply.

### Examples

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

### Example 1

Commercially available coconut shells were crushed by airflow milling until a volume particle size D50 was 6.8 ± 0.5 µm and D90 was 13.7 ± 0.5 µm, then washed with 3 mol/L perchloric acid aqueous solution at 60°C for 12 h, washed with deionized water until neutral, washed with 3 mol/L NaOH aqueous solution at 95°C for 24 h, washed with deionized water until neutral, and dried with air to remove moisture. The dried powder was placed in a furnace, heated at a rate of 0.1°C/min to 1400°C in a mixed gas atmosphere with a hydrogen/argon volume ratio of 5: 95 and under furnace pressure of -5 kPa as shown by vacuum meter, and then insulated for 24 h to obtain a carbonaceous material.

In a constant temperature and humidity box of 25°C and 100% RH, the carbonaceous material having a mass of B was uniformly placed on a watch glass having a diameter of 10 cm with a stacking thickness of ≤ 0.2 cm and stood for 100 h, and then an increased mass of the carbonaceous material was weighed and denoted as a mass A of adsorbed water vapor.

A true density of the carbonaceous material was tested by an Archimedes impregnation volume displacement method, with n-butanol as a medium.

### Examples 2-16 and Comparative Examples 1-6

The method for preparing a carbonaceous material was similar to that in Example 1, except that preparation process parameters of the carbonaceous material were adjusted, as detailed in Table 1.

### Comparative Example 7

Commercially available coconut shells were crushed by airflow milling until a volume particle size D50 was 6.8 ± 0.5 µm and D90 was 13.7 ± 0.5 µm, then washed with 3 mol/L perchloric acid aqueous solution at 60°C for 12 h, washed with deionized water until neutral, and dried with air to remove moisture. The dried powder was placed in a furnace, heated at a rate of 0.1°C/min to 1400°C in a mixed gas atmosphere with a hydrogen/argon volume ratio of 5: 95 and under furnace pressure of -5 kPa, and then insulated for 24 h to obtain a carbonaceous material.

### Comparative Example 8

Commercially available coconut shells were crushed by airflow milling until a volume particle size D50 was 6.8 ± 0.5 µm and D90 was 13.7 ± 0.5 µm, then washed with 3 mol/L NaOH aqueous solution at 95°C for 24 h, washed with deionized water until neutral, and dried with air to remove moisture. The dried powder was placed in a furnace, heated at a rate of 0.1°C/min to 1400°C in a mixed gas atmosphere with a hydrogen/argon volume ratio of 5: 95 and under furnace pressure of -5 kPa, and then insulated for 24 h to obtain a carbonaceous material.

### Comparative Example 9

Commercially available coconut shells were crushed by airflow milling until a volume particle size D50 was 6.8 ± 0.5 µm and D90 was 13.7 ± 0.5 µm, and then the powder was placed in a furnace, heated at a rate of 0.1°C/min to 1400°C in a mixed gas atmosphere with a hydrogen/argon volume ratio of 5: 95 and under furnace pressure of -5 kPa, and insulated for 24 h to obtain a carbonaceous material.

### Comparative Example 10

Commercially available coconut shells were washed with 3 mol/L perchloric acid aqueous solution at 60°C for 12 h, then washed with deionized water until neutral, washed with 3 mol/L NaOH aqueous solution at 95°C for 24 h, washed with deionized water until neutral, and dried with air to remove moisture. The dried coconut shells were crushed by airflow milling until a volume particle size D50 was 6.8 ± 0.5 µm and D90 was 13.7 ± 0.5 µm, and then the powder was placed in a furnace, heated at a rate of 0.1°C/min to 1400°C in a mixed gas atmosphere with a hydrogen/argon volume ratio of 5: 95 and under furnace pressure of -5 kPa, and insulated for 24 h to obtain a carbonaceous material.

### Performance test

The carbonaceous material prepared in the Examples and Comparative Examples, styrene butadiene rubber (SBR) as a binder, carboxymethyl cellulose sodium (CMC-Na) as a thickener, and carbon black as a conductive agent were fully mixed in a mass ratio of 96.2:1.8:1.2:0.8 in an appropriate amount of deionized water as a solvent to form a uniform negative electrode slurry; and the negative electrode slurry was uniformly applied to the surface of a copper foil as a negative electrode current collector and dried in an oven for later use. Ethylene carbonate (EC), ethyl methyl carbonate (EMC), and diethyl carbonate (DEC) were mixed in a volume ratio of 1:1:1 to obtain an organic solvent, and then NaPF₆ was dissolved in the organic solvent to prepare a 1 mol/L electrolytic solution. Afterwards, a metal sodium plate as a counter electrode and a polyethylene (PE) film as a separator were assembled in an argon protected glove box to form a CR2430 button cell.

At 25°C, the button cell prepared in the Examples and Comparative Examples was discharged with constant current to 0 V at a current density of 10 mA/g, and initial discharge capacity of the button cell was recorded; and then the button cell was charged with constant current to 2.0 V at the current density of 10 mA/g, and initial charge capacity of the button cell was recorded.

The reversible gram capacity of the carbonaceous material (mAh/g) = the initial charge capacity of the button cell/ the mass of the carbonaceous material.

The initial coulombic efficiency of the carbonaceous material (%) = the initial charge capacity of the button cell/ the initial discharge capacity of the button cell × 100%.

**Table 1**

| Number | Acidic solution washing | Alkaline solution washing | Hydrogen-argon volume ratio | Furnace pressure (KPa) | Heating rate (°C/min) | Carbonization temperature (°C) | Time for maintaining temperature (h) | A/B | True density (g/cm³) | I_{d}/I_{g} | Reversible gram capacity (mAh/g) | Initial coulombic efficiency (%) |
|---|---|---|---|---|---|---|---|---|---|---|---|---|
| Example 1 | Yes | Yes | 5:95 | -5 | 0.1 | 1400 | 24 | 0.495 | 1.30 | 1.030 | 450 | 91.8 |
| Example 2 | Yes | Yes | 5:95 | -5 | 0.5 | 1400 | 24 | 0.350 | 1.35 | 1.147 | 376 | 89.4 |
| Example 3 | Yes | Yes | 5:95 | -5 | 1 | 1400 | 24 | 0.173 | 1.47 | 1.203 | 308 | 87.1 |
| Example 4 | Yes | Yes | 4:96 | -5 | 0.1 | 1400 | 24 | 0.452 | 1.35 | 1.281 | 417 | 90.1 |
| Example 5 | Yes | Yes | 3:97 | -5 | 0.1 | 1400 | 24 | 0.384 | 1.27 | 1.274 | 387 | 89.4 |
| Example 6 | Yes | Yes | 2:98 | -5 | 0.1 | 1400 | 24 | 0.311 | 1.41 | 1.269 | 362 | 88.5 |
| Example 7 | Yes | Yes | 1:99 | -5 | 0.1 | 1400 | 24 | 0.253 | 1.58 | 1.194 | 343 | 86.9 |
| Example 8 | Yes | Yes | 5:95 | -5 | 0.1 | 1000 | 24 | 0.500 | 1.01 | 1.285 | 321 | 86.5 |
| Example 9 | Yes | Yes | 5:95 | -5 | 0.1 | 1150 | 24 | 0.498 | 1.09 | 1.146 | 378 | 88.3 |
| Example 10 | Yes | Yes | 5:95 | -5 | 0.1 | 1300 | 24 | 0.496 | 1.24 | 1.084 | 431 | 90.4 |
| Example 11 | Yes | Yes | 5:95 | -5 | 0.1 | 1500 | 24 | 0.403 | 1.37 | 1.027 | 398 | 87.5 |
| Example 12 | Yes | Yes | 5:95 | -5 | 0.1 | 1600 | 24 | 0.247 | 1.56 | 1.013 | 340 | 85.2 |
| Example 13 | Yes | Yes | 5:95 | -4.5 | 0.1 | 1400 | 24 | 0.481 | 1.39 | 1.042 | 430 | 89.7 |
| Example 14 | Yes | Yes | 5:95 | -4 | 0.1 | 1400 | 24 | 0.372 | 1.43 | 1.081 | 387 | 87.5 |
| Example 15 | Yes | Yes | 5:95 | -3.5 | 0.1 | 1400 | 24 | 0.226 | 1.53 | 1.157 | 331 | 86.9 |
| Example 16 | Yes | Yes | 5:95 | -3 | 0.1 | 1400 | 24 | 0.152 | 1.59 | 1.190 | 303 | 85.2 |
| Comparative Example 1 | Yes | Yes | 0:100 | -5 | 0.1 | 1400 | 24 | 0.127 | 1.63 | 1.047 | 294 | 85.0 |
| Comparative Example 2 | Yes | Yes | 5:95 | -1 | 0.1 | 1400 | 24 | 0.071 | 1.75 | 1.241 | 275 | 81.6 |
| Comparative Example 3 | Yes | Yes | 5:95 | -5 | 3 | 1400 | 24 | 0.083 | 1.53 | 1.284 | 274 | 84.7 |
| Comparative Example 4 | Yes | Yes | 5:95 | -5 | 0.1 | 1700 | 24 | 0.120 | 1.58 | 0.940 | 290 | 82.7 |
| Comparative Example 5 | Yes | Yes | 5:95 | -5 | 0.1 | 900 | 24 | 0.548 | 0.92 | 1.428 | 282 | 83.2 |
| Comparative Example 6 | Yes | Yes | 5:95 | -5 | 0.1 | 1400 | 0.5 | 0.641 | 0.87 | 1.184 | 277 | 81.9 |
| Comparative Example 7 | Yes | No | 5:95 | -5 | 0.1 | 1400 | 24 | 0.128 | 1.62 | 1.241 | 294 | 84.1 |
| Comparative Example 8 | No | Yes | 5:95 | -5 | 0.1 | 1400 | 24 | 0.088 | 1.78 | 1.329 | 283 | 82.5 |
| Comparative Example 9 | No | No | 5:95 | -5 | 0.1 | 1400 | 24 | 0.058 | 1.82 | 1.406 | 272 | 80.3 |
| Comparative Example 10 | Yes | Yes | 5:95 | -5 | 0.1 | 1400 | 24 | 0.073 | 1.80 | 1.613 | 277 | 81.7 |

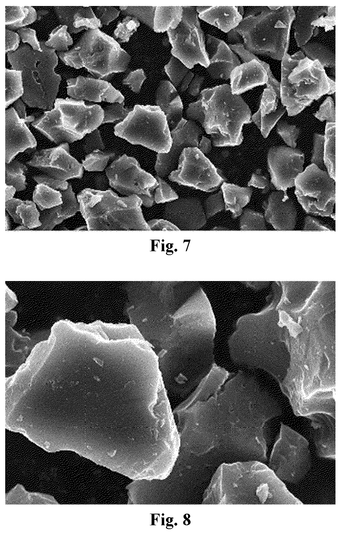

Fig. 7 and Fig. 8 are scanning electron microscopy images of a carbonaceous material provided by the present application. As shown in Fig. 7 and Fig. 8, the morphology of the carbonaceous material provided by the present application is an irregular polygon. Based on the test results in Table 1, when the mass A/B of water vapor adsorbed by per unit mass of the carbonaceous materials for 100 h was 0.13 to 0.50 under constant temperature and humidity conditions of 25°C and 100% RH, the carbonaceous materials can have both relatively high capacity and initial coulombic efficiency.

When the mass A/B of water vapor adsorbed by per unit mass of the carbonaceous materials prepared in Comparative Examples 1-10 for 100 h was less than 0.13 or greater than 0.50 under constant temperature and humidity conditions of 25°C and 100% RH, the carbonaceous materials cannot have both relatively high capacity and initial coulombic efficiency.

Based on the test results of Examples 1 and 8-10, when the parameters A/B of the carbonaceous materials were close to each other, the capacity and initial coulombic efficiency of the carbonaceous material with a relatively high true density can be further improved. This is due to the large interlayer spacing of the carbonaceous material obtained in Example 8, where a lot of water vapor was adsorbed into interlayer structures, resulting in a relatively high mass of the adsorbed water vapor. However, because n-butanol fluid cannot enter the interlayer structures of the carbonaceous material, the test value of the true density was relatively low. Moreover, because the interlayer structures of the carbonaceous material obtained in Example 8 cannot effectively store active ions, its capacity and initial coulombic efficiency were lower than those in Examples 1, 9 and 10.

Therefore, when the mass A/B of water vapor adsorbed by per unit mass of the carbonaceous material for 100 h was 0.13 to 0.50 and the true density ρ was 1.0 g/cm³ to 1.6 g/cm³, and optionally 1.05 g/cm³ to 1.45 g/cm³, the capacity and initial coulombic efficiency of the carbonaceous material can be further improved.

It should be noted that the present application is not limited to the foregoing embodiments. The foregoing embodiments are only examples, and all embodiments within the scope of the technical solution of the present application that have substantially the same composition and effects as the technical concept fall within the technical scope of the present application. Moreover, various variations that can be conceived by those skilled in the art and other embodiments constituted by combining some elements of the embodiments without departing from the scope of the main purpose of the present application are further included in the scope of the present application.

## Claims

1. A carbonaceous material, having 0.13 ≤ A/B ≤ 0.50, wherein A represents a mass of water vapor adsorbed on the carbonaceous material after a water vapor adsorption test by placing the carbonaceous material under constant temperature and humidity conditions of 25°C and 100% RH for 100 h, and B represents an initial mass of the carbonaceous material.

2. The carbonaceous material according to claim 1, wherein 0.15 ≤ A/B ≤ 0.50, and optionally 0.30 ≤ A/B ≤ 0.496.

3. The carbonaceous material according to claim 1 or 2, wherein the carbonaceous material has a true density ρ of 1.0 g/cm³ to 1.6 g/cm³, and optionally 1.05 g/cm³ to 1.45 g/cm³.

4. The carbonaceous material according to any one of claims 1-3, wherein the carbonaceous material comprises a plurality of nano pore structures, and optionally, the carbonaceous material comprises a plurality of pore structures having a pore size of 10 nm or less.

5. The carbonaceous material according to any one of claims 1-4, wherein
in Raman spectra of the carbonaceous material, I_{d}/I_{g} is 1.0 to 1.3, and optionally 1.05 to 1.15, wherein I_{d} represents a d-peak intensity of Raman shift within a range of 1350 ± 50 cm⁻¹, and I_{g} represents a g-peak intensity of Raman shift within a range of 1580 ± 50 cm⁻¹; and/or
an interlayer spacing of a (002) crystal plane of the carbonaceous material is ≥ 0.37 nm, and optionally 0.37 nm to 0.42 nm; and/or
in X-ray diffraction spectra of the carbonaceous material, a 2θ value corresponding to a (002) crystal plane peak is 22° to 24°.

6. The carbonaceous material according to any one of claims 1-5, wherein the carbonaceous material satisfies at least one of the following conditions (1) to (5):
(1) the carbonaceous material has a volume particle size Dv50 of 3 µm to 7 µm, and optionally 4 µm to 6 µm;
(2) the carbonaceous material has a volume particle size Dv90 of 8 µm to 15 µm, and optionally 9 µm to 12 µm;
(3) the carbonaceous material has a specific surface area of 0.1 m²/g to 10 m²/g, and optionally 1 m²/g to 5 m²/g;
(4) the carbonaceous material has a powder compaction density of 0.90 g/cm³ to 1.05 g/cm³ under a force of 50000 N, and optionally 0.93 g/cm³ to 1.02 g/cm³; and
(5) the carbonaceous material has a tap density of 0.80 g/cm³ to 0.95 g/cm³, and optionally 0.85 g/cm³ to 0.90 g/cm³.

7. A method for preparing a carbonaceous material, comprising the following steps:
S10, providing a raw material which is an organic carbon source;
S20, crushing the raw material to a required particle size;
S30, washing and removing impurities, performed by washing the crushed raw material obtained in S20 to remove impurities, wherein the washing and removing impurities process comprises at least an acidic solution washing step and an alkaline solution washing step; and
S40, carbonizing, performed by placing, in a furnace, the raw material obtained in S30 after washing and removing impurities, introducing a protective gas containing hydrogen, controlling furnace pressure to ≤ -2 kPa relative to standard pressure, then heating at a rate of ≤ 1°C/min to a target temperature T1, and maintaining the target temperature T1 for a target time t1 to obtain a carbonaceous material, wherein the carbonaceous material has 0.13 ≤ A/B ≤ 0.50, wherein A represents a mass of water vapor adsorbed on the carbonaceous material after a water vapor adsorption test by placing the carbonaceous material under constant temperature and humidity conditions of 25°C and 100% RH for 100 h, and B represents an initial mass of the carbonaceous material.

8. The method according to claim 7, wherein in S20, the crushing comprises ball milling or airflow milling crushing.

9. The method according to claim 7 or 8, wherein
in S30, the washing and removing impurities process comprises the following steps in order: acidic solution washing, water washing, alkaline solution washing, water washing, and drying; or
in S30, the washing and removing impurities process comprises the following steps in order: washing by an alkaline solution, washing by water, washing by an acidic solution, washing by water, and drying.

10. The method according to any one of claims 7-9, wherein in S30, the acidic solution satisfies at least one of the following conditions (1) to (4):
(1) a H⁺ concentration of the acidic solution is 0.1 mol/L to 6 moL/L, and optionally 1 mol/L to 6 moL/L.
(2) washing temperature of the acidic solution is 10°C to 95°C, and optionally 30°C to 95°C;
(3) washing time of the acidic solution is 1 h to 24 h, and optionally 10 h to 24 h; and
(4) a solute of the acidic solution comprises one or more of hydrochloric acid, nitric acid, sulfuric acid, and perchloric acid, and a solvent the acidic solution comprises water.

11. The method according to any one of claims 7-10, wherein in S30, the alkaline solution satisfies at least one of the following conditions (1) to (4):
(1) a OH⁻ concentration of the alkaline solution is 0.1 mol/L to 6 moL/L, and optionally 1 mol/L to 6 moL/L;
(2) washing temperature of the alkaline solution is 10°C to 95°C, and optionally 30°C to 95°C;
(3) washing time of the alkaline solution is 1 h to 24 h, and optionally 10 h to 24 h; and
(4) a solute of the alkaline solution comprises NaOH, KOH, or a combination thereof, and a solvent of the alkaline solution comprises water.

12. The method according to any one of claims 7-11, wherein
in S40, the temperature T1 is 1000°C to 1600°C, and optionally 1150°C to 1500°C; and/or
in S40, the time t1 is ≥ 1 h, and optionally 10 h to 24 h; and/or
in S40, heating rate is 0.05°C/min to 1°C/min, and optionally 0.1°C/min to 1°C/min; and/or
in S40, the protective gas comprises a mixture of hydrogen and inert gas, and the hydrogen has a volume concentration of greater than 0 and less than or equal to 5%, and optionally 1% to 5%; and/or
in S40, the furnace pressure is -5 kPa to -2 kPa, and optionally -5 kPa to -3 kPa.

13. The method according to any one of claims 7-12, wherein in S10, the organic carbon source comprises one or more of biomass materials and thermoplastic resin materials;
optionally, the biomass materials comprise one or more of energy crops and biomass wastes; and
optionally, the thermoplastic resin materials comprise one or more of phenolic resin, acrylic resin, polyvinyl chloride, polycarbonate, epoxy resin, paraformaldehyde, coumarone resin, and petroleum resin.

14. A secondary battery, comprising a negative electrode plate, the negative electrode plate comprising the carbonaceous material according to any one of claims 1-6 or the carbonaceous material prepared by the method according to any one of claims 7-13.

15. An electrical device, comprising the secondary battery according to claim 14.
